Europäisches Patentamt

European Patent Office

Office européen des brevets

(11) Veröffentlichungsnummer: **0 080 244 B1**

(12) **EUROPÄISCHE PATENTSCHRIFT**

(45) Veröffentlichungstag der Patentschrift: **11.02.87**

(21) Anmeldenummer: **82201482.5**

(22) Anmeldetag: **22.11.82**

(51) Int. Cl.⁴: **G 06 F 13/00**

(54) **Verfahren zum Identifizieren eines systemverwandten, physikalisch trennbaren Programmspeichers und ein dieses Verfahren verwendendes Datenverarbeitungssystem.**

(30) Priorität: **25.11.81 US 324743**
**25.11.81 US 324744**

(43) Veröffentlichungstag der Anmeldung:
**01.06.83 Patentblatt 83/22**

(45) Bekanntmachung des Hinweises auf die
Patenterteilung:
**11.02.87 Patentblatt 87/07**

(84) Benannte Vertragsstaaten:
**AT BE CH DE FR GB IT LI NL SE**

(56) Entgegenhaltungen:
**DE-A-2 923 738**
**US-A-3 806 882**
**US-A-3 890 601**
**US-A-4 267 578**

(73) Patentinhaber: **THE MAGNAVOX COMPANY**
**100 East 42nd Street**
**New York, N.Y. 10017 (US)**
(73) Patentinhaber: **N.V. Philips'**
**Gloeilampenfabrieken**
**Groenewoudseweg 1**
**NL-5621 BA Eindhoven (NL)**

(72) Erfinder: **Heffron, Charles Buckner**
**c/o INT. OCTROOIBUREAU B.V. Prof. Holstlaan 6**
**NL-5656 AA Eindhoven (NL)**
Erfinder: **Leonarduzzi, Roberto**
**c/o INT. OCTROOIBUREAU B.V. Prof. Holstlaan 6**
**NL-5656 AA Eindhoven (NL)**
Erfinder: **Haken, Jack Edward**
**c/o INT. OCTROOIBUREAU B.V. Prof. Holstlaan 6**
**NL-5656 AA Eindhoven (NL)**
Erfinder: **Mayer, Robert Thomas**
**c/o INT. OCTROOIBUREAU B.V. Prof. Holstlaan 6**
**NL-5656 AA Eindhoven (NL)**

(74) Vertreter: **Galama, Jan Egidius Maria et al**
**INTERNATIONAAL OCTROOIBUREAU B.V. Prof.**
**Holstlaan 6**
**NL-5656 AA Eindhoven (NL)**

Courier Press, Leamington Spa, England.

**Beschreibung**

Die Erfindung betrifft ein Verfahren zum Identifizieren eines systemverwandten, physikalisch trennbaren Programmspeichers in einem Datenverarbeitungssystem, das eine Zentraleinheit, einen Organisationsspeicher und eine Einrichtung zum physikalischen ·Einführen eines Programmspeichers in das System enthält, wobei das Verfahren folgende Schritte umfasst:

a) den Vergleich eines im Programmspeicher geschriebenen Kennzeichens mit einem im Organisationsspeicher geschriebenen Bezugskennzeichens;

b) Erzeugung eines Fehlersignals, wenn das Bezugskennzeichen dem Kennzeichen im Programmspeicher nicht entspricht;

c) Blockierung des Betriebs des Datenverarbeitungssystems unter der Steuerung des Fehlersignals.

Die Erfindung bezieht sich auch auf ein dieses Verfahren verwendende Datenverarbeitungssystem.

Eine derartige Methode ist in der Veröffentlichung IBM TDB Vol. 14, Nr. 11, April 1972, S. 3531 beschrieben. Nach dem beschriebenen Verfahren führt die erste Instruktion in dem im Programmspeicher geschriebenen Programm den Vergleich aus. Diese erste Instruktion besteht aus dem Vergleich eines Kennzeichens im Programm mit einem im Arbeitungsorganisationsspeicher der Zentraleinheit fest verdrahteten Kennzeichen. Ein ungültiger Vergleich blockiert den Betrieb des Datenverarbeitungssystems durch Sperrung des Programmlaufs. Das bedeutet, dass, wenn ein Programmspeicher, der nicht das richtige Kennzeichen enthält, beispielsweise im Falle eines Programms, das von einem unbefugten Hersteller kopiert wurde, in das System eingeführt wird, die Durchführung des Programms nicht stattfindet.

Das gesetzwidrige Kopieren und Verkaufen von Material, das urheberrechtlich geschützt oder das Eigentum eines Warenzeichenbesitzers oder eines derartigen Herstellers ist, ist ein ernsthaftes Problem. Beispiele sind das Kopieren von Videobändern und die Kopierung von Software in Computersystemen, insbesondere für Kleincomputersysteme wie Videospielen. Es fallen beim Verkauf gesetzwidrig kopierter Programme grosse Gewinne an.

Hersteller von Videospielen verkaufen Hardware (beispielsweise das Bedienungsgerät) mit nur geringem Gewinn, weil sie aus dem Verkauf von Software, beispielsweise in einer Kassette gespeicherter Software, Gewinne wieder einzubringen erhoffen. Dies ist einer der Hauptgründe zum wirksamen Schützen des Software-Eigentums des Herstellers gegen Kopierung durch unbefugte Hersteller. Daher baut der Hersteller in seine Systeme oder in seine Software eine Einrichtung oder ein Verfahren ein, die bzw. das derartiges Kopieren unmöglich macht oder zumindest erschwert. Vorzugsweise versucht der Hersteller sein System derart auszulegen, dass es nur verwendet werden kann, wenn mit seinem eigenen System verwandte Software, d.h. Software seiner eigenen Herstellung oder einer anderen befugten Fertigung angewandt wird.

Ein Nachteil der meisten bekannten Software-Schutzsysteme oder Softeware-Schutzverfahren besteht darin, dass sie leicht umgangen werden können. In dem in der IBM TDB-Veröffentlichung beschriebenen Verfahren bildet der Vergleichsschritt, in dem die Übereinstimmung zwischen den Kennzeichen geprüft wird, einen Teil des im Programmspeicher geschriebenen Programms, d.h. die erste Instruktion im Programm. Jedoch wird ein erfahrerer, aber unbefugter Kopierer den Zweck dieser ersten Instruktion feststellen und diese erste Instruktion entfernen oder neutralisieren. Das bedeutet, dass, wenn das Datenverarbeitungssystem mit einem derartigen kopierten Programm arbeitet, aus dem diese erste Instruktion entfernt worden ist, der Vergleichsschritt nie durchgeführt wird. Dadurch wird kein Fehlersignal erzeugt und das System wird nicht blokkiert.

Der Erfindung liegt die Aufgabe zugrunde, ein Verfahren zum Identifizieren eines systemverwandten physikalischtrennbaren Programmspeichers zu schaffen, wobei das Verfahren nach einer Initierung des Datenverarbeitungssystems und unabhängig vom Inhalt des Programmspeichers durchgeführt wird.

Diese Aufgabe wird mit dem erfindungsgemässen Verfahren dadurch gelöst, dass ein Rückstellsignal nach einer Initierung des Datenverarbeitungssystems erzeugt wird, und dass unter der Steuerung des Rückstellsignals ein Startbefehlssignal von der Zentraleinheit zum Starten des erwähnten Vergleichs erzeugt wird.

Also wenn das erfindungsgemässe Verfahren benutzt wird, erzeugt die Zentraleinheit ein Startbefehlssignal zum Starten ·des Vergleichs nach einer Initierung des Datenverarbeitungssystems. Der Vergleich wird also immer nach einer Initierung des Systems und unabhängig von den im Programmspeicher geschriebenen Instruktionen durchgeführt. Daher erfolgt immer eine Prüfung der Übereinstimmung der Kennzeichen nach dem Erzeugen des Startbefehlssignals von der Zentraleinheit. Das bedeutet jedoch, dass bei Nicht-Übereinstimmung oder im Falle der Abwesenheit der Kennzeichen im Programmspeicher (beispielsweise durch das Kopieren) der Betrieb des Datenverarbeitungssystems immer blockiert wird.

Vorzugsweise ist das erfindungsgemässe Verfahren dadurch gekennzeichnet, dass die Initierung aus der Einführung eines Programmspeichers in die Einrichtung zum physikalischen Einführen eines Programmspeichers besteht. Also wird das erfindungsgemässe Verfahren jedesmal durchgeführt, wenn ein Programmspeicher in die Einrichtung zum physikalischen Einführen eines Programmspeichers eingeführt wird. Das System arbeitet also nur, wenn der eingeführte Programmspeicher als ein systemverwandter Programmspeicher indentifiziert worden ist.

Vorzugsweise besteht die Initierung aus der Aktivierung der Stromversorgung für das Datenverarbeitungssystem nach den Einführen eines Programmspeichers in die Einrichtung zum physikalischen Einführen eines Programmspeichers. Dadurch ist es nicht möglich, das erfindungsgemässe Verfahren durch die Einführung eines Programmspeichers in ein System mit einer entaktivierten Stromversorgung zu umgehen.

Die Erfindung bezieht sich auch auf ein Datenverarbeitungssystem mit einer Zentraleinheit, einem Organisationsspeicher, einer Einrichtung zum physikalischen Einführen eines Programmspeichers in das System, einem Komparator zum Vergleichen eines im Programmspeicher geschriebenen Kennzeichens mit einem Bezugskennzeichen im Organisationspeicher und zum Erzeugen eines Vergleichsergebnisses, sowie mit einer Blockieranordnung zum Blockieren des Datenverarbeitungsystems unter der Steuerung eines negativen Vergleichsergebnisses. Das Datenverarbeitungssystem nach der Erfindung ist dadurch gekennzeichnet, dass der Komparator einen integralen Teil des Datenverarbeitungssystems bildet und unter der Steuerung eines nach einer Initierung des Systems erzeugten Rückstellsignals aktiviert werden kann.

In einem erfingungsgemässen Datenverarbeitungssystem enthält das Kennzeichen vorzugsweise eine Eigentumsanzeige, die aus einem geschützten Warenzeichen, oder urheberrechtigem Material, oder einer Erklärung besteht, die angibt, dass in diesem System die Erfindung nach dem Anspruch in der vorliegenden Patentanmeldung und nach jeder daraus entstandenen Patentschrift ausgenutzt ist.

Es wurde bereits beschrieben, dass der Komparator nach einer Initierung des Datenverarbeitungssystems aktiviert wird, und dass, wenn das im Programmspeicher geschriebene Kennzeichen mit dem Bezugskennzeichen nicht übereinstimmt, das System blockiert wird. Das bedeutet, dass zum Herstellen eines brauchbaren Programmspeichers der unbefugte Hersteller dazu gezwungen ist, das entsprechende Kennzeichen in den Programmspeicher aufzunehmen. Da jetzt das Kennzeichen eine Eigentumsanzeige ist, ist ein unbefugter Hersteller dazu gezwungen, diese Eigentumsanzeige aufzunehmen, um einen brauchbaren Programmspeicher herzustellen. Das bedeutet jedoch eine Verletzung des Gesetzes, d.h. des Warenzeichengesetzes bei einem geschützten Warenzeichen und des Urheberrechtgesetzes im Falle von urheberrechtlichem Material. Der unbefugte Hersteller macht sich dadurch also der Markenfälschung schuldig.

Es sei bemerkt, dass die Verwendung urheberrechtlichen Materials als Kennzeichen bereits in der DE—OS 29 23 738 beschrieben wurde. Dabei wird jedoch das Kennzeichen ähnlich wie in der IBM TDB-Veröffentlichung verwendet, d.h. als ein Teil des im Programmspeicher geschriebenen Programms. Wie das Verfahren in der IBM TDB-Veröffentlichung kann das in der DE—OS 29 23 738 beschriebene Verfahren wieder durch Auslassen des urheberrechtlichen Textes und der Vergleichsinstruktion im Programm umgangen werden. Wenn gemäss der vorliegenden Patentanmeldung der unbefugte Hersteller das urheberrechtliche Material aus dem Programmspeicher entfernt, wird das Datenverarbeitungssystem mit einem derartigen Programmspeicher nicht arbeiten.

Vorzugsweise enthält ein erfindungsgemässes Datenverarbeitungssystem mit der Zentraleinheit verbundene Anzeigegeräte. Bei der Anwendung in einem derartigen Datenverarbeitungssystem wird das Verfahren nach der Erfindung vorzugsweise dadurch gekennzeichnet, dass als Ergebnis des genannten Startbefehlssignals die Eigentumanzeige an den Anzeigegeräten für eine so lange Zeit angezeigt wird, dass sie vom Menschen wahrnehmbar ist. Da die Eigentumanzeige als eine Video-Anzeige und/oder Audio-Anzeige angezeigt wird, lässt sich eine Verletzung des Gesetzes leicht feststellen.

Die Erfindung wird nachstehend an Hand einer bevorzugten Ausführungsform beschrieben, in der das Datenverarbeitungssystem ein video-gesteuertes Fernsehspielbediengerät und der Programmspeicher eine ROM-Patrone enthält. Es wird klar sein, dass sich die Erfindung nicht auf diese bevorzugte Ausführungsform beschränkt, sondern auf alle Datenverarbeitungssysteme anwendbar ist, beispielsweise auf Computersysteme, in denen ein Programmspeicher benutzt wird, der physikalisch in das System eingeführt wird, zum Beispiel ein Magnetband, eine Scheibe oder ein optisches Aufzeichnungsmittel.

Die Erfindung wird nachstehend an Hand der Zeichnung näher erläutert. Es zeigen:

Fig. 1 ein Blockschaltbild mit dem Aufbau eines programmierbaren Videospiels;

Fig. 2 eine Querverweissliste des Videospiels nach Fig. 1, und

Fig. 3 an Hand eines Ablaufdiagramms die Implementierung des erfindungsgemässen Verfahrens im Videospiel nach Fig. 1 und 2.

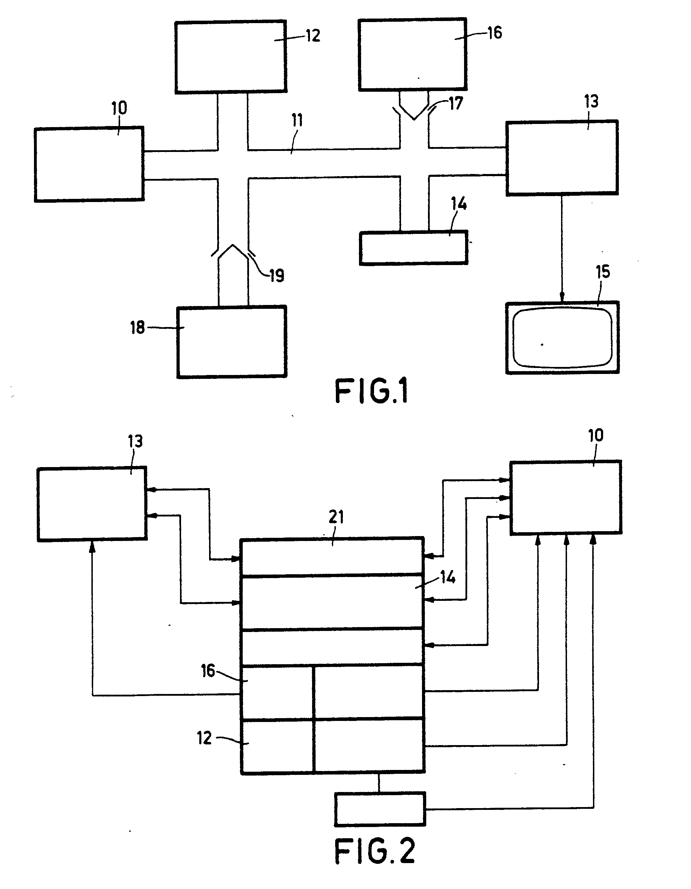

In der Fig. 1 ist schematisch der Aufbau eines bus-orientierten, programmierbaren Videospiels dargestellt. Der Aufbau nach Fig. 1 ist auch zum Beispiel entsprechend dem Aufbau einiger computergesteuerter Geräte. Ein Mikroprozessor 10 überträgt Daten, Instruktionen und Adressinformation über einen Bus 11 mist einem nichtflüchtigen Speicher 12, der in der weiteren Beschreibung mit EXECUTIVE ROM bezeichnet wird, der EXECUTIVE-Programmsoftware enthält, einem Videogenerator 13, einem Direktzugriffspeicher (RAM) 14, einem Programmspeicher 16, der in der weiteren Beschreibung mit GAME ROM bezeichnet wird und Software für ein bestimmtes Spiel enthält, und fakultativ mit verschiedenen Eingabe-Ausgabeschnittstellen 18, die auf eines oder mehrere Hilfsgeräte, zum Beispiel einen Drucker oder einen Bandrecorder, Daten überträgt. In einem Videospiel sind der Mikroprozessor 10, der EXECUTIVE ROM 12, der Videogenerator 13 und der RAM 14 alle in eine einzelne Hardware-Bedieneinheit aufgenommen. Der GA-ME ROM 16 und die Schnittstellen 18 sind extern und vom Bediengerät trennbar. Der Bus 11 ist mit Einrichtungen 17 und 19 zum physikalischen Einführen des GAME ROM bzw. der Schnittstellen 18 ausgerüstet. Diese Einrichtungen sind zum Beispiel entfernbare Anschlüsse.

Der Mikroprozessor 10 enthält im allgemeinen einen Integrationsschaltungsprozessor, der im Exekutiv ROM 12 im GAME ROM 16 oder im RAM 14 gespeicherte Programminstruktionen für Lesedaten in den ROM 12 und 16 und im RAM 14 an den E/A-Schnittstellen 18 oder in den Datenregistern des Videogenerators 13 adressieren und durchführen kann. Der Mikroprozessor kann auch Daten in die Adressen in RAM 14, in die Register im Videogenerator 13 und in die E/A-Schnittstellen 18 einschreiben.

Der Videogenerator 13 kann aus einer oder mehreren zugeordneten integrierten Schaltungen bestehen, die ein Bildabtastfernsehsignal in Beantwortung der Bilddaten erzeugen, die über den Bus (Daten + Adresse) 11 aus dem Mikroprozessor 10 und/oder einem oder mehreren Speichern 12, 14 und 16 ankommen. Der Videogenerator kann einen Zeichengenerator zum Erzeugen alfanummericher Zeichen in einem Videobild in Beantwortung der ASCII-codierten Zeicheninformation und der Stellenadressen aus dem Datenbus enthalten und kann zusätzlich Schaltungen zum Erzeugen objekt-orientierter Anzeigen und/oder zum Abbilden von im Direktzugriffspeicher 14 an Punkten im Videobild vorhandener Information enthalten. Das Vertikalabtastfernsehsignal aus dem Videogenerator 13 gelangt an eine Kathodenstrahlröhre 15 und wird daran wiedergegeben, welche Röhre in das Videospiel-Bediengerät aufgenommen oder ein getrennter Fernsehmonitor oder Fernsehempfänger sein kann. Der Videogenerator kann auch die Möglichkeit haben, Audiosignale zu erzeugen, die entweder über den Fernsehempfänger 15 oder über einen getrennten Lautsprecher im Bediengerät erzeugt werden.

Der Mikroprozessor 10 kommuniziert mit den Speichern 12, 14 und 16 und den Registern des Videogenerators 13 durch Übertragung diskreter, von dieser Teilen identifizierter Adressinformationen über den Bus 11. Der "Adressraum" einer bevorzugten Ausführungsform des Videospiel ist in Fig. 2 veranschaulicht. Eine Gruppe beispielsweise von 4K adressierbaren Stellen enthält im EXECUTIVE-Festwertspeicher geschriebene Daten. Der EXECUTIVE-Festwertspeicher enthält Daten und Programmroutinen, die von allen oder vielen der trennbaren Spielprogramme verwendet werden, die mit Hilfe der Bedieneinheit arbeiten. Sie können zum Beispiel Programme zum Initieren des Bediengeräts beim Start eines jeden Spiels oder zum Erzeugen von Normalanzeigen enthalten.

Der Adressraum enthält weiter beispielsweise ungefähr 32K Adressen, die dem trennbaren GAME ROM 16 zugeordnet sind, der Programmroutinen und Daten enthält, die ausschliesslich einem oder mehreren besonderen Videospielen zugeordnet sind und deren Aufgabe es ist, die Anzeigen, Spielergebnisse und logische Funktion dieser Spiele zu erzeugen.

Der Adressraum enthält weiter beispielsweise ungefähr 16K des Direktzugriffspeichers 14, der anders zum Speichern einer Videoanzeige in jedem Format (beispielsweise als eine Direktbitkarte oder in einem codierten zeichenoder objektorientierten Format) oder zum Notizzetteldatenspeicherung verwendbar ist.

Eine verhältnismässig geringe Anzahl von Stellen des Adressraums ist Registern und Steuerfunktionen im Videogenerator zugeordnet und werden vom Mikroprozessor zur Steuerung der Betriebsart und des Betriebs des Generators und zur Bestimmung des Zustands der Anzeige verwendet.

Wie in Fig. 2 dargestellt, hat der Videogenerator 13 die Möglichkeit, Informationen aus dem GAME ROM zu lesen und Informationen im RAM 14 als auch in den eigenen Registern 21 zu schreiben oder zu lesen. Der Mikroprozessor 10 kann Informationen in den Videogeneratorregistern, im RAM 14 und im externen E/A Tor einschreiben und auslesen und Informationen aus den GAME- und EXECUTIVE-ROM-Speichern auslesen. Dem Mikroprozessor 10 zugeordnete Hardware-Schaltungsanordnungen lesen automatisch eine erste Programminstruktion aus der Adresse O des EXECUTIVE-ROM nach einer Initierung des Bediengeräts. Eine Initierung erfolgt, wenn an das Bediengerät Spannung angelegt wird, wenn eine "RESET"-Taste gedrückt wird, und wenn ein neuer GAME-ROM 16 in den Anschluss 17 eingeschoben wird.

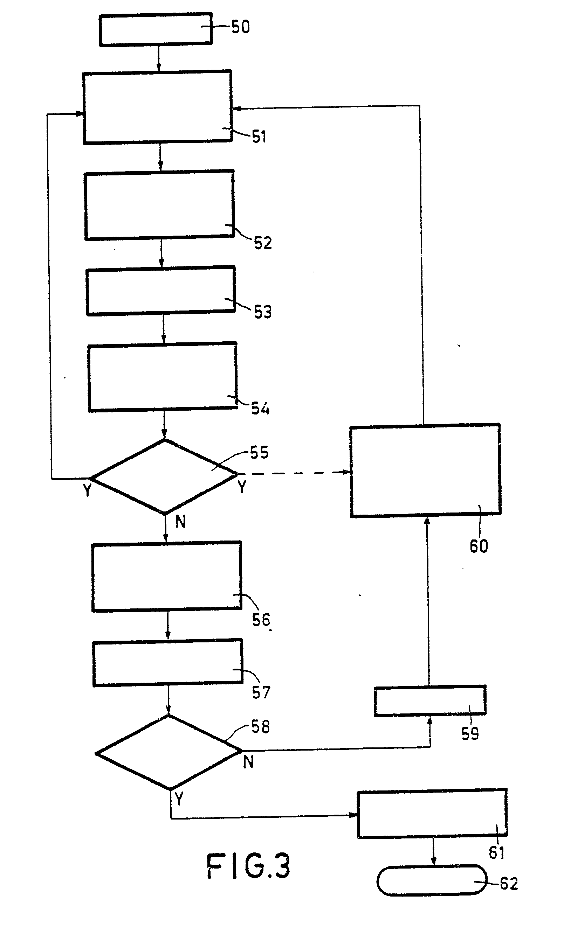

Im Fig. 3 ist ein Ablaufdiagramm in einer bevorzugten Form einer Initierungsroutine dargestellt, die das erfindungsgemässe Verfahren im Videospielbediengerät nach Fig. 1 verwirklicht. Mit Ausnahme der Beschreibung im nachstehenden Text wird die Initierungsroutine in der Form von in den EXECUTIVE-ROM 12 aufgenommenen Firmeninstruktionen (Firmware) verwirklicht und bildet also in unveränderlichen Form einen physikalischen Teil der Hardware des Videospielsteuergeräts. Ein Rückstellsignal (50), das entweder nach einer Initierung beim Einschalten und beim Einsetzen einer ROM-Patrone in den Anschluss 17 oder durch eine handbediente Rückstelltaste erzeugt wird, löst (51) in der Mikroprozessor Hardware die Erzeugung eines Startbefehlssignals zum Starten der Durchführung der Instruktion an der Stelle O im EXECUTIVE-Festwertspeicher 12 aus. Die Stelle O enthält eine Instruktion, die dafür sorgt, dass der Programmlauf einen Sprung (52) nach einer ENABLE-Routine macht, die an einer vorgegebenen Stelle im EXECUTIVE ROM gespeichert ist. Die Friegaberoutine gibt zunächst einen Befehl zum Videogenerator 13 aus, der bewirkt, dass der Videogenerator die Videoanzeige am Schirm löscht (53) und dann damit anfängt, Informationen aus einer Datentabelle zu lesen (54), insbesondere ein Kennzeichen, das sich an vorgegebenen Adressen in dem in den Anschluss 17 eingeschobenen GAME ROM befindet, und entsprechende Informationen in den Videoanzeigesteuerbereich des RAM schreibt.

Der Videogenerator 13 kann möglicherweise Hardware umfassen, die den Betrieb der Audio- und/oder Videowiedergabe beim Empfang eines gegebenen Befehls oder einer gegebenen Befehlsfolge blockiert. Nach dem Eingeben der Daten aus dem GAME ROM in den RAM prüft die Freigaberoutine (55) die eingegebenen Daten und bestimmt, ob es dabei Instruktionen gibt, die beim Zuführen zum Videogenerator den Generatorbetrieb blockieren würden. Es ist möglich, dass ein unbefugter Hersteller einen wesentlichen Teil des erfindungsgemässen Verfahrens vermeidet, insbesondere die Anzeige (57), die nachstehend beschrieben wird, wenn er eine Instruktion in das Programm des GAME ROM eingibt, um die Anzeige des im Programm-ROM gespeicherten Kennzeichens zu löschen. Zum Unterdrücken des Einflusses einer derartigen Instruktion untersucht die Freigaberoutine auf derartige Instruktionen. Wenn derartige Instruktionen im RAM vorhanden sind (Y), schleift das Programm zur Stelle O zurück und startet die Ausführung einer Endlosschleife der vorbeschriebenen Programminstruktionen, bis der GAME ROM entfernt ist. Bei der Durchführung der Schleife bleibt die Videoanzeige gelöscht, und das Bedienerät hat nicht die Möglichkeit, irgendeinen Programmcode im GAME ROM durchzuführen. Daneben (punktierte Linie) kann die Anzeige so ausgelegt werden, dass (60) der Text "INVALID SOFTWARE" oder eine ähnliche geeigente Nachricht dargestellt wird.

Wenn die Freigaberoutine bestimmt, dass die Datentabelle keine Instruktion enthält (N), die den Videogenerator blockieren würde, benutzt sie (56) die in der Datentabelle vorhandenen Daten, die in diesem Falle auch das im GAME ROM gespeicherte Kennzeichen enthält, als eine Anzeigeeingabe zum Videogenerator 13. Der Mikroprozessor gibt (57) einen Befehl zum Videogenerator 13 aus, um die gespeicherten eingegebenen Daten an der Anzeige 15 darzustellen. Nach dem Freigeben des Videogenerators und während der Darstellung des Bildes vergleicht der Mikroprozessor (58) die im RAM 14 gespeicherten Daten und/oder den Inhalt der Datentabelle im GAME ROM 16 mit einem Bezugskennzeichen, das an einer Stelle (an Stellen) im EXECUTIVE ROM 12 aufgezeichnet sind. Das Ergebnis des Vergleichs ist negativ, wenn sich das zum Eingeben in die Videoanzeige gespeicherte Kennzeichen vom Bezugskennzeichen im EXECUTIVE ROM unterscheidet (N), oder wenn im GAME ROM kein Kennzeichen vorhanden ist (beispielsweise von einem Kopierer ausgelassen). Wenn das Vergleichsergebnis negativ ist, erzeugt der Mikroprozessor ein Fehlersignal (59) und schleift zur Stelle O zurück und geht mit der Durchführung einer Endlosschleife weiter, bis der GAME ROM entfernt ist. In einer anderen Möglichkeit löscht die Schleife den Schirm und stellt die Anzeige (60) dar, die von der Datentabelle im GAME ROM definiert ist; aber es wird keine Durchführung von Programmen oder von anderen Anzeigefeldern in den im GAME ROM gespeicherten Daten gestattet.

Wenn der Mikroprozessor bestimmt, dass das im RAM gespeicherte Datenfeld mit dem im EXECUTIVE ROM gespeicherten Bezugsfeld übereinstimmt (Y), verzweigt (61) der Mikroprozessor zu einer Durchführung eines Videospiels oder eines anderen Programms im GAME ROM und die Freigaberoutine wird beendet (62). Auf diese Weise wird realisiert, dass das System nur dann arbeitet, wenn ein (mit dem Bezugskennzeichen) übereinstimmendes Kennzeichen im GAME ROM vorhanden ist.

Einer der Vorteile der Erfindung besteht darin, dass die vom Videogenerator 13 in Beantwortung der Datentabelle im RAM erzeugte Anzeige eine ist, die nur gesetzlich von oder mit dem Erlaubnis des Herstellers oder des Eigentümers des Bedienegeräts verwendet werden kann. Beispielsweise kann die Anzeige Audio- oder Videomaterial enthalten, das vom Bedienegeräteigentümer urheberrechtlich geschützt ist; sie kann eines oder mehrere geschützte Warenzeichen oder sonstige industrielle oder kommerzielle Eigentumsrechte des Eigentümers oder Text enthalten, die unzweideutig angibt, dass das Programmaterial vom Eigentümer herrührte, hergestellt wurde, oder unter der Lizenz oder mit der Erlaubnis des Eigentümers erzeugt wurde. Wenn der Apparat patentrechtlich geschützt ist oder Gegenstand einer Patentanmeldung ist, kann der Text ebenfalls unzweideutig diese Tatsache erwähnen.

Eine bevorzugte Ausführungsform des Apparats, der Gegenstand einer Patentanmeldung ist, könnte auch einen Satz enthalten, der angibt, dass der Apparat die Erfindung dieser Anmeldung und/oder entsprechender fremder Anmeldungen und/oder daraus abgeleiteter Patentschriften ausnutzt, oder einen anderen gleichartigen Identifizierungssatz. Beispielsweise könnte ein derartiger Text einen Satz enthalten gleich "Dieses Gerät verwendet die Erfindung der Patentanmeldung mit dem Titel "Verfahren zum Identifizieren eines systemverwandten, physikalisch trennbaren Programmspeichers und ein dieses Verfahren benutzendes Datenverarbeitungssystem, die Philips zugewiesen wurde, und jede daraus abgeleitende Patentschrift". Dieser Satz könnte selbstverständlich auch das Einreichungsdatum dieser Anmeldung enthalten, das selbstverständlich das Einreichungsdatum der vorliegenden Anmeldung ist. Anders könnte der Satz wie folgt lauten "Dieses Gerät verwendet die Erfindung der Patentanmeldung Nr. ..." in dem die Nummer der zwei Zeilen höher angegebene Nummer der Anmeldung enthalten ist. Der Satz kann auch Hinweisen auf entsprechende fremde Patentanmeldungen und Patentschriften enthalten. Vorzugsweise wird die Anzeige eine Zeit dargestellt, die lange genug ist, um von Menschen wahrgenommen zu werden, Verstösse lassen sich dabei leicht feststellen.

Unter einigen Bedingungen wäre es möglich, dass die Darstellung derartiger Satzarten unerwünscht ist. In einem derartigen Fall kann das erfindungsgemässe Verfahren derart zusammengesetzt sein, dass die Signale, die diese Sätze erzeugen, kurzlebig sind, oder dass die Anzeige nur auf besonderem Wunsch vom Videogenerator 13 erzeugt wird, beispielsweise durch die Verwendung einer besonderen Instruktion zu diesem Zweck, welche spezielle Instruktion immer dann verwendbar ist, wenn ein Verstoss festgestellt werden muss. Es wird klar sein, dass derartige Anzeigen in nicht lizenzierten Geräten die Bestätigung eines Verstosses bilden.

In einer der Ausführungsbeispiele, in der das hier beschriebene Thema verwendbar ist, insbesondere ein programmierbares Fernsehspiel, würde das Programmaterial mit seinen Instruktionen und das Kennzeichen, das die insbesondere gewünschte Anzeige erzeugt, in einen Programmspeicher aufgenommen sein, zum Beispiel in einen ROM, der in einer cassettenartigen Patrone montiert ist, die zum Einstecken in einen elektrischen Anschluss in einem Bediengerät mit der Computeranordnung, mit der der ROM arbeitet, ausgelegt ist.

Die in der Datentabelle enthaltene Information, die im GAME ROM gespeichert und durch die Freigaberoutine ausgelesen wird, kann eine aktuelle Bitmuster-Speicherkarte des an der Anzeige 15 darzustellenden Bildes sein. Anders kann die Information im Programm-ROM-Datentabelle ein Code sein, der einen Zeichengenerator im Videogenerator 13 zum Darstellen einer Anzeige freigeben, oder sie kann ein vorgegebener Zeichensatz sein, der vom Mikroprozessor als eine Instruktion erkannt wird, der keine andere Funktion hat als das Aktivieren des RAM, beispielsweise durch die Verwendung im EXECUTIVE ROM gespeicherter Daten zum Darstellen der angegebenen Anzeige. Auf ähnliche Weise braucht der Vergleich zwischen der Datentabelle und den Bezugsdaten im EXECUTIVE ROM keine Gleichheit, sondern nur Übereinstimmung zwischen den Daten anzugeben. Der hier benutzte Begriff "Übereinstimmung" bedeutet, dass die Daten bie ihrer Verarbeitung im Videogenerator 13 eine Anzeige mit den gleichen erkennbaren und unterscheidenden Vorteilen erzeugen, die nur von oder mit der Erlaubnis des Bediengerätherstellers benutzt werden kann.

In einer bevorzugten Ausführungsform der Erfindung wird die Anzeige gelöscht, bevor dass von den Daten in der Datentabelle geprüfte Bild dargestellt wird. Auf diese Weise ist gewährleistet, dass die Anzeige keinen Text in Ergänzung der befehlsmässigen Anzeige enthält, der ihre Bedeutung ändern könnte.

Die Erfindung beschränkt sich nicht auf Hardware, die bestimmt, dass ein vorgegebenes Datenfeld beim Beginn des Programmbetriebs visuell dargestellt wird. Also kann in anderen Ausführungsformen die EXECUTIVE ROM Routine einen Programmcode enthalten, die gewährleistet, dass einige oder alle von der Datentabelle erzeugten Anzeigen für die Dauer des im GAME ROM enthaltenen Programms dargestellt werden.

Obgleich die bevorzugte Ausführungsform der Erfindung als ein Verfahren beschrieben wurde, das in der Verbindung mit einem Videospiel-Hardwarebediengerät durchgeführt wird, wird es dem Fachmann deutlich sein, dass einige oder alle in Software-Begriffen beschriebenen Funktionen auf andere Weise durch Hardware-Schaltungen verwirklicht werden können und dass die hier beschriebenen Schaltungsanordnungen in anderen computergesteuerten Geräten betrieben werden können, beispielsweise in medizinischen Bildwiedergabe- oder maschninengesteuerten Geräten. Ebenfalls braucht die Programmquelle, die vom Bediengerät trennbar ist, keinen Festwertspeicher zu sein, sondern kann auf andere Weise eine andere bekannte Programmquelle sein, die vom Bediengerät trennbar ist, beispielsweise einen Magnetband- oder Magnetplattenspeicher oder ein Modem, das Daten aus einer entfernten Stelle über eine Kommunikationsschaltung empfängt.

**Patentansprüche**

1. Verfahren zum Identifizieren eines systemverwandten, physikalisch trennbaren Programmspeichers in einem Datenverarbeitungssystem, das eine Zentraleinheit, einen Organisationsspeicher und eine Einrichtung zum physikalischen Einführen eines Programmspeichers in das System enthält, wobei das Verfahren folgende Schritte umfasst:
a) den Vergleich eines im Programmspeicher geschriebenen Kennzeichens mit einem Bezugskennzeichen im Organisationsspeicher;
b) Erzeugung eines Fehlersignals, wenn das Bezugskennzeichen dem Kennzeichen im Programmspeicher nicht entspricht;
c) Blockierung des Betriebs des Datenverarbeitungssystems unter der Steuerung des Fehlersignals;
dadurch gekennzeichnet, dass ein Rückstellsignal nach einer Initierung des Datenverarbeitungssystems erzeugt wird, und dass unter der Steuerung des Rückstellsignals ein Startbefehlssignal von der Zentraleinheit zum Starten des erwähnten Vergleichs erzeugt wird.

2. Verfahren nach Anspruch 1, dadurch gekennzeichnet, dass die Initierung aus der Einführung eines Programmspeichers in die Einrichtung zum physikalischen Einführen eines Programmspeichers besteht.

3. Verfahren nach Anspruch 1, dadurch gekennzeichnet, dass die Initierung aus der Aktivierung der Stromversorgung für das Datenverarbeitungssystem nach der Einführung eines Programmspeichers in die Einrichtung zum physikalischen Einführen eines Programmspeichers besteht.

4. Ein Datenverarbeitungssystem mit einer Zentraleinheit, einem Organisationsspeicher, einer Einrichtung zum physikalischen Einführen eines Programmspeichers in das System, einem Komparator zum Vergleichen eines im Programmspeicher geschriebenen Kennzeichens mit einem Bezugskennzeichen im Organisationsspeicher und zum Erzeugen eines Vergleichsergebnisses, sowie mit einer Blockierungseinrichtung zum Blockieren des Datenverarbeitungssystems unter der Steuerung eines negativen Vergleichsergebnisses, dadurch gekennzeichnet, dass der Komparator einen integralen Teil des Datenverarbeitungssystems bildet und unter der Steuerung eines nach einer Initierung des Systems erzeugten Rückstellsignals aktiviert werden kann.

5. Datenverarbeitungssystem nach Anspruch 4, dadurch gekennzeichnet, dass das Kennzeichen eine Eigentumsanzeige enthält.

6. Datenverarbeitungssystem nach Anspruch 5, dadurch gekennzeichnet, dass die Eigentumsanzeige ein geschütztes Warenzeichen enthält.

7. Datenverarbeitungssystem nach Anspruch 5, dadurch gekennzeichnet, dass die Eigentumsanzeige urheberrechtliches Material enthält.

8. Datenverarbeitungssystem nach Anspruch 5, dadurch gekennzeichnet, dass die Eigentumsanzeige eine Erklärung enthält, die angibt, dass in diesem System die Erfindung nach der vorliegenden Patentanmeldung und nach einiger daraus abgeleiteten Patentschrift verwendet ist.

9. Verfahren nach einem oder mehreren der Ansprüche 1, 2 oder 3 in einem Datenverarbeitungssystem nach einem oder mehreren der Ansprüche 5, 6, 7 oder 8, das Anzeigemittel in der Verbindung mit der Zentral-einheit enthält, dadurch gekennzeichnet, dass als Ergebnis eines Startbefehlssignals die Eigentumsanzeige an der erwähnten Anzeigeeinrichtung für eine Zeit dargestellt wird, die lange genug ist, um vom Menschen währgenommen zu werden.

10. Videospiel, dessen Wirkung auf dem Verfahren nach einem oder mehreren der Ansprüche 1, 2, 3 oder 9 basiert.

11. Videospiel mit einem Datenverarbeitungssystem nach einem oder mehreren der Ansprüche 4 bis 8.

## Revendications

1. Procédé pour identifier une mémoire de programme alliée à un système et physiquement séparable de celui-ci, dans un système de traitement de données, qui comprend une unité centrale, une mémoire d'organisation et un dispositif pour introduire physiquement une mémoire de programme dans le système, le procédé comprenant les opérations suivantes:

a) la comparaison d'un identificateur inscrit dans la mémoire de programme avec un identificateur de référence inscrit dans la mémoire d'organisation;

b) la production d'un signal d'erreur lorsque l'identificateur de référence ne correspond pas à l'identificateur présent dans la mémoire de programme;

c) le blocage du fonctionnement du système de traitement de données sous la commande du signal d'erreur; caractérisé en ce qu'un signal de retour à l'état initial est produit après une initialisation du système de traitement de données et que, sous la commande du signal de retour à l'état initial, un signal d'ordre de démarrage est produit par l'unité centrale pour faire démarrer la comparaison précitée.

2. Procédé suivant la revendication 1, caractérisé en ce que l'initialisation est constituée par l'introduction d'une mémoire de programme dans le dispositif pour l'introduction physique d'une mémoire de programme.

3. Procédé suivant la revendication 1, caractérisé en ce que l'initialisation est constituée par l'activation de l'alimentation en courant pour le système de traitement de données après l'introduction d'une mémoire de programme dans le dispositif pour l'introduction physique d'une mémoire de programme.

4. Système de traitement de données comportant une unité centrale, une mémoire d'organisation, un dispositif d'introduction physique d'une mémoire de programme dans le système, un comparateur pour comparer un identificateur inscrit dans la mémoire de programme avec un identificateur de référence présent dans la mémoire d'organisation pour produire un résultat de comparaison, ainsi qu'un dispositif de blocage pour bloquer le système de traitement de données sous la commande d'un résultat de comparaison négatif, caractérisé en ce que la comparateur fait partie intégrante du système de traitement de données et peut être activé sous la commande d'un signal de retour à l'état initial produit après l'initialisation du système.

5. Système de traitement de données suivant la revendication 4, caractérisé en ce que l'identificateur comprend une indication de propriété.

6. Système de traitement de données suivant la revendication 5, caractérisé en ce que l'indication de propriété comprend une marque de fabrique déposée.

7. Système de traitement de données suivant la revendication 5, caractérisé en ce que l'indication de propriété comprend une indication de droit d'auteur.

8. Système de traitement de données suivant la revendication 5, caractérisé en ce que l'indication de propriété comprend une déclaration qui indique que ce système utilise l'invention suivant la demande de brevet en question et suivant tout brevet qui en découle.

9. Procédé suivant l'une quelconque des revendications 1, 2 et 3, dans un système de traitement de données suivant une ou plusieurs des revendications 5, 6, 7 ou 8, qui comprend des moyens de signalisation reliés à l'unité centrale, caractérisé en ce qu'à titre de résultat d'un signal d'ordre de démarrage, l'indication de propriété est présentée par le dispositif de signalisation précité pendant un temps suffisamment long pour pouvoir être observée par l'homme.

10. Jeu vidéo dont le fonctionnement est basé sur le procédé suivant l'une quelconque des revendications 1, 2, 3 ou 9.

11. Jeu vidéo comprenant un système de traitement de données suivant l'une quelconque des revendications 4 à 8.

## Claims

1. A method for identifying a system-allied, physically separable program memory in a data processing system comprising a central processing unit, an executive memory and a device for physically introducing a program memory into the system, said method comprising the following steps:

a) comparing an identifier stored in said program memory with a reference identifier stored in said executive memory;

b) generating an error signal if said reference identifier does not correspond to said identifier stored in said program memory;

c) disabling, under the control of said error signal, the operation the data processing system, characterized in that a reset signal is generated after an initialization of the data processing system, under the control of said reset signal a start command signal being generated by the central processing unit in order to start said comparison.

2. A method as claimed in Claim 1, characterized in that said initialization consists of the introduction of a program memory into said device for physically introducing a program memory.

3. A method as claimed in Claim 1, characterized in that said initialization consists of the activation of the power supply for the data processing system after the introduction of a program memory into said device for physically introducing a program memory.

4. A data processing system comprising a central processing unit, an executive memory, a device for physically introducing a program memory into the system, a comparator for comparing an identifier stored in said program memory with a reference identifier stored in said executive memory and for generating a comparison result, and also comprising a disabling device for disabling the data processing system under the control of a negative comparison result, characterized in that the comparator is an integral part of the data processing system and is activatable under the control of a reset signal generated after an initialization of the system.

5. A data processing system as claimed in Claim 4, characterized in that said identifier comprises a proprietory display.

6. A data processing system as claimed in Claim 5, characterized in that said proprietory display comprises a registered trademark.

7. A data processing system as claimed in Claim 5, characterized in that said proprietory display comprises copyrighted material.

8. A data processing system as claimed in Claim 5, characterized in that said proprietory display comprises a statement indicating that in this system use is made of the invention as claimed in the present patent application and any patent issuing thereof.

9. In a data processing system as claimed in any of the Claims 5, 6, 7 or 8, wherein said data processing system comprises display means connected to said central processing unit, a method as claimed in any one of the Claims 1, 2 or 3, characterized in that as a result of a start command signal the proprietory display is displayed on said display means for a period of time which is long enough so as to be perceptive by humans.

10. A video game based on a method as claimed in one or more of the Claims 1, 2, 3 or 9.

11. A video game comprising a data processing system as claimed in one or more of the Claims 4 to 8.

FIG.1

FIG.2

0  080  244

FIG.3

2